# EUROPEAN PATENT APPLICATION

(11) **EP 2 916 221 A1**
(43) Date of publication of application: **09.09.2015**
(21) Application number: 15156783.1
(22) Date of filing: 26.02.2015
(51) Int. Cl.: G06F 9/48, G06F 9/50

(54) **Task assignment**

(30) Priority: 05.03.2014 JP 2014043333
(71) Applicant: FUJITSU LIMITED, Kawasaki-shi, Kanagawa 211-8588 (JP)
(72) Inventor: Ueda, Haruyasu, Kanagawa, 211-8588 (JP); Matsuda, Yuichi, Kanagawa, 211-8588 (JP); Maeda, Takamistu, Kanagawa, 211-8588 (JP)
(74) Representative: Hoffmann Eitle

(57) **Abstract**

A master server (10) assigns a first process to each of a plurality of slave servers (30). When the master server (10) receives one or more completion notifications of one or more first tasks of a first process related to a second task of a second process that is assigned to each of the plurality of slave servers (30) and that is executed by using one or more execution results of the one or more first tasks, the master server (10) estimates a processing amount of the second task. The master server (10) sends information related to the estimated processing amount to the slave servers (30) to each of which the second task is assigned.

## Description

### FIELD

The embodiments discussed herein are directed to a task assignment program, a task execution program, a task assignment device, a task execution device, and a task assignment method.

### BACKGROUND

With the popularization of cloud computing, a distributed processing system that executes a process, in a distributed manner, on mass data stored in a cloud system by using multiple servers. Hadoop (registered trademark) that uses, as the fundamental technology, the Hadoop Distributed File System (HDFS) and the MapReduce process is known as the distributed processing system.

HDFS is a file system that stores data in a plurality of servers in a distributed manner. MapReduce is a mechanism that performs the distributed processing on data in HDFS in units of tasks and that executes a Map process, a Shuffle sort process, and a Reduce process.

In the distributed processing using MapReduce, a master server assigns, by using a hash function or the like, a task, such as a Map process or a Reduce process, to a plurality of slave servers and then sends a divided piece of data to each of the slave servers. Then, each of the slave servers executes the assigned task.

Assignment of a task to each of the slave servers is uniformly performed by using, for example, a hash function. In contrast, the processing amount of each Reduce task is not always uniform depending on an amount of data that is targeted for the Reduce task related to, for example, a key that is associated with the Reduce task.

Because completion time of a process performed in each of the slave servers varies depending on the processing amount that is associated with a Reduce task, the completion of the overall job constituted by several tasks depends on the completion of the process that is performed by the slave server whose performance is the lowest. Accordingly, there is a known technology that adjusts an amount of data such that, after all of the Reduce tasks are assigned to slave servers, the processing amount associated with each of the Reduce tasks becomes uniform.

Patent Document 1: Japanese Laid-open Patent Publication No. 2012-118669

However, because non-uniformity of the processing amount of each of the Reduce tasks varies depending on various effects, such as input data or the result of a Map process, the adjustment process performed in the above described technology does not always shorten the completion time of the overall job.

For example, to adjust the processing amount of a Reduce task, because adjustment is performed after the completion of all of the Map processes, the start of the Reduce process to be executed in each of the slave servers is delayed and thus there may sometimes be a case in which the processing time of the overall job becomes rather long.

Accordingly, it is an object in one aspect of an embodiment of the present invention to provide a task assignment program, a task execution program, a task assignment device, a task execution device, and a task assignment method that can shorten the completion time of the overall job.

### SUMMARY

According to an aspect of an embodiment, a task assignment program that causes a first server (10) to execute a process. The process includes assigning a first process to each of a plurality of second server devices (30); estimating, when one or more completion notifications of one or more first tasks of a first process related to a second task of a second process that is assigned to each of the second server devices (30) and that is executed by using one or more execution results of the one or more first tasks are received, a processing amount of the second task; and sending information related to the estimated processing amount to the second server devices (30) to each of which the second task is assigned.

### BRIEF DESCRIPTION OF DRAWINGS

FIG. 1 is a schematic diagram illustrating an example of the overall configuration of a distributed processing system according to a first embodiment;
FIG. 2 is a functional block diagram illustrating the functional configuration of a master server according to the first embodiment;
FIG. 3 is a schematic diagram illustrating an example of information stored in a job list DB;
FIG. 4 is a schematic diagram illustrating an example of information stored in a task list DB;
FIG. 5 is a schematic diagram illustrating an example of a completion notification of a Map process;
FIG. 6 is a functional block diagram illustrating the functional configuration of a slave server according to the first embodiment;
FIG. 7 is a schematic diagram illustrating a Map process;
FIG. 8 is a schematic diagram illustrating a Shuffle process;
FIG. 9 is a schematic diagram illustrating a Reduce process;
FIG. 10 is a schematic diagram illustrating a process of setting a flag by estimating the processing amount of a Reduce process task;
FIG. 11 is a flowchart illustrating the flow of a process executed by the master server according to the first embodiment;
FIG. 12 is a flowchart illustrating the flow of a process of completing a subject task executed by the master server;
FIG. 13 is a flowchart illustrating the flow of a process executed by the slave server according to the first embodiment;
FIG. 14 is a flowchart illustrating the flow of a start process of a Reduce process task executed by the slave server;
FIG. 15 is a flowchart illustrating the flow of a process of dividing the Reduce process task executed by the slave server;
FIG. 16 is a flowchart illustrating the flow of an assignment process of a Reduce process task according to a second embodiment;
FIG. 17 is a flowchart illustrating the flow of an assignment process of a Reduce process task according to a third embodiment; and
FIG. 18 is a block diagram illustrating an example of the hardware configuration of each server.

### DESCRIPTION OF EMBODIMENTS

Preferred embodiments will be explained with reference to accompanying drawings. The present invention is not limited to the embodiments. Furthermore, the embodiments can be appropriately used in combination.

### [a] First Embodiment

### Overall configuration

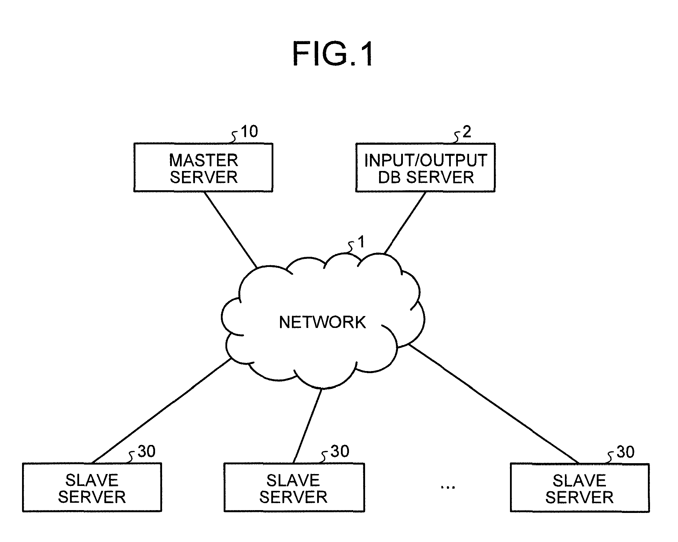

FIG. 1 is a schematic diagram illustrating an example of the overall configuration of a distributed processing system according to a first embodiment. As illustrated in FIG. 1, in the distributed processing system, an input/output database (DB) server 2, a master server 10, multiple slave servers 30 are connected via a network 1 such that they can communicate with each other.

In the distributed processing system, a distributed processing application that uses a distributed processing framework, such as Hadoop (registered trademark), is executed in each computer and HDFS or the like is used as data infrastructure.

The input/output DB server 2 is a database server that stores therein meta information or the like that is targeted for the distributed processing. For example, the meta information stored in the input/output DB server 2 is used to specify which data is stored in which of the slave servers 30.

The master server 10 is a server that performs the overall management of the distributed processing system. For example, from the meta information stored in the input/output DB server 2, the master server 10 specifies which data is stored in which of the slave servers 30. Furthermore, the master server 10 manages a task or a job assigned to each of the slave servers 30 and assigns, to the slave servers 30, tasks, such as Map processes, Reduce processes, or the like,.

Each of the slave servers 30 is a server that includes therein a distributed processing application, that executes a Map process or a Reduce process, and that executes the distributed processing on the data that is managed by HDFS. For example, the slave server 30 includes a plurality of processors and a plurality of disks. Furthermore, an identifier is assigned to each of the slave servers 30 in order to be uniquely identified.

Each of the slave servers 30 executes a task of a Map process, which is assigned by the master server 10, on the data acquired from the input/output DB server 2. Furthermore, by using the result of the Map process obtained from each of the slave servers, the slave server 30 executes a Shuffle sort process and executes the task of a Reduce process that is assigned by the master server 10.

In the following, each of the processes will be described. The Map process is a process that executes the Map function defined by a user. For example, the Map process outputs a pair of "Key, Value" from input data as an intermediate result. The Shuffle sort process is a process that sorts the result of the Map process by "Key" and that merges the pair of "Key, Value" that has the same "Key". The Reduce process is a process that executes the Reduce function that is defined by a user. For example, the Reduce process executes a process of superimposing the pair of "Value" with the same "Key" from the result of the Shuffle sort process and creates a new pair of "Key, Value" with a new format.

In this state, the master server 10 assigns a Map process to each of the slave servers 30. When the master server 10 receives a completion notification of a Map process task related to a Reduce process task that is assigned to each of the slave servers 30 and that is executed by using the execution result of the Map process task, the master server 10 estimates a processing amount of the Reduce process task. The master server 10 sends information related to the estimated processing amount to the slave servers 30 to each of which the Reduce process task is assigned.

Each of the slave servers 30 receives the information related to the processing amount of the Reduce process task from the master server 10 that assigns, to each of the slave servers 30, the Reduce process task that uses the execution result of the Map process task. When each of the slave servers 30 executes the Reduce process task assigned by the master server 10, each of the slave servers 30 changes a method of processing the Reduce process task in accordance with the related information.

In this way, because the master server 10 detects a Reduce process task with a large processing amount from the end result of some of the Map process tasks and notifies the slave servers 30 of the result, the slave servers 30 can divide the Reduce process task and execute the process in parallel. Consequently, it is possible to shorten the completion time of the overall process.

### Configuration of the master server

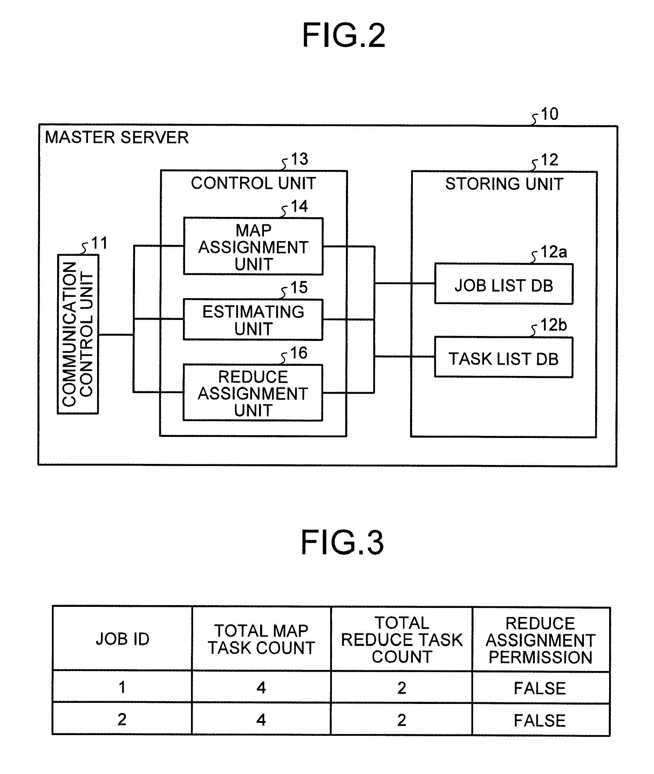

FIG. 2 is a functional block diagram illustrating the functional configuration of a master server according to the first embodiment. As illustrated in FIG. 2, the master server 10 includes a communication control unit 11, a storing unit 12, and a control unit 13.

The communication control unit 11 is a processing unit that executes communication with another device, such as the slave servers 30 or the like and is, for example, a network interface card or the like. For example, the communication control unit 11 sends a Map process task or a Reduce process task to each of the slave servers 30. Furthermore, the communication control unit 11 receives the result of a Map process or the like from each of the slave servers 30.

The storing unit 12 is a storage device that includes a job list DB 12a and a task list DB 12b and is, for example, a memory, a hard disk, or the like. Furthermore, the storing unit 12 stores therein a program or the like executed by the control unit 13.

The job list DB 12a is a database that stores therein job information targeted for the distributed processing. FIG. 3 is a schematic diagram illustrating an example of information stored in the job list DB 12a. As illustrated in FIG. 3, the job list DB 12a stores therein, in an associated manner, "the Job ID, the total Map task count, the total Reduce task count, and the Reduce assignment permission".

The "Job ID" stored in the database is an identifier for identifying a job. The "total Map task count" is the sum total of the Map process tasks included in a job. The "total Reduce task count" is the sum total of the Reduce process tasks included in a job. The "Reduce assignment permission" indicates a state of assignment availability of a Reduce process task. If a Reduce process task can be assigned, "true" is set, whereas, if not, "false" is set. Furthermore, "false" is also set when a new job is added. Furthermore, the items of "the Job ID, the total Map task count, and the total Reduce task count" are set and updated by an administrator or the like.

In the example illustrated in FIG. 3, the job with the "Job ID" of "1" is constituted by four Map process tasks and two Reduce process tasks and indicates the state in which the job is still not currently able to be assigned. Similarly, the job with the "Job ID" of "2" is constituted by four Map process tasks and two Reduce process tasks and indicates the state in which the job is still not currently able to be assigned.

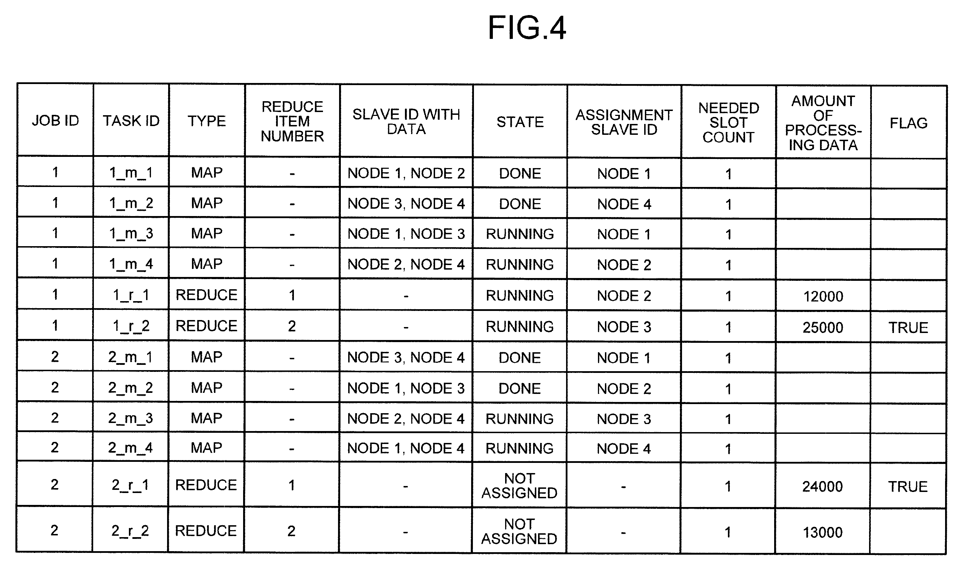

The task list DB 12b is a database that stores therein information related to a Map process task and a Reduce process task. FIG. 4 is a schematic diagram illustrating an example of information stored in a task list DB. As illustrated in FIG. 4, the task list DB 12b stores therein "the Job ID, the Task ID, the type, the Reduce item number, the slave ID with data, the state, the assignment slave ID, the needed slot count, the amount of processing data, and the flag".

The "Job ID" stored in the database is an identifier for identifying a job. The "Task ID" is an identifier for identifying a task. The "type" is information that indicates a Map process or a Reduce process. The "slave ID with data" is an identifier for identifying the slave server 30 that holds data targeted for the Map process and is, for example, a host name. The "state" is the state of the target task indicating one of the states as follows: a process completion (Done) state, an active (Running) state, and a before assignment (Not assigned) state. The "Reduce item number" indicates the execution order of the target Reduce processes. The "assignment slave ID" is an identifier for identifying the slave servers 30 to each of which a task is assigned and is, for example, a host name or the like. The "needed slot count" is the number of slots that are used to execute a task. The "amount of processing data" is an amount of data of the target Reduce process task. The "flag" indicates whether an instruction to change a processing method of the target Reduce process task is given. If the instruction is given, "true" is set.

In the case illustrated in FIG. 4, for the job with "jobID" of "1", the Map process task "1_m_1" that uses one slot is assigned to the slave server 30 with the "Node1". Furthermore, the slave server 30 with the "Node1" acquires data from both the slave server 30 with the "Node1" and the slave server 30 with the "Node2"; executes a Map process; and has completed the execution of the Map process.

Furthermore, for the job with "jobID" of "1", the Reduce process task "1_r_2" that is executed in the second order and that uses one slot is assigned to the slave server 30 with the "Node3". Furthermore, the amount of data of the Reduce process task "1_r_2" is "25000" and "true" is set to the flag. Furthermore, the slave server 30 with the "Node3" indicates that this slave server 30 divides a Reduce process task and is running in parallel.

Furthermore, the Job ID, the Task ID, the type, and the Reduce item number are created in accordance with the information stored in the job list DB 12a. The slave ID with data can be specified meta information or the like stored in the input/output DB server 2. The state is updated by the assignment state of tasks, the processing result or the like obtained from the slave server 30. The assignment slave ID is updated when a task is assigned. The needed slot count can be previously specified such that, for example, a single slot is assigned to a single task. The amount of processing data can be estimated from the end result of a Map process. The flag is set depending on whether an amount of processing data exceeds a threshold.

The control unit 13 is a processing unit that includes a Map assignment unit 14, an estimating unit 15, and a Reduce assignment unit 16 and is, for example, an electronic circuit, such as a processor or the like. Furthermore, the control unit 13 manages the overall process performed by the master server 10.

The Map assignment unit 14 is a processing unit that assigns, to the slave server 30, one or more Map process tasks that are the tasks of a Map process in each job. Specifically, the Map assignment unit 14 assigns each of the Map process tasks to the slave servers 30 by using, for example, information on the slave ID with data. Then, the Map assignment unit 14 updates the "assignment slave ID", the "state", or the like illustrated in FIG. 4.

For example, when the Map assignment unit 14 receives an assignment request for a Map process task from the slave server 30 or the like, the Map assignment unit 14 refers to the task list DB 12b and specifies a Map process task in which the "state" indicates "Not assigned". Then, if a Map process task in which the ID of the slave server 30 that has sent the assignment request is included in the "slave ID with data" is present, the Map assignment unit 14 selects the Map process task with priority. In contrast, if the target Map process task is not present, the Map assignment unit 14 selects a Map process task by using an arbitrary method and sets the selected task as the Map process task targeted for the assignment. Thereafter, the Map assignment unit 14 stores the ID of the slave server 30 that has sent the assignment request in the "slave server ID" of the Map process task targeted for the assignment.

Then, the Map assignment unit 14 notifies the specified and assigned slave server 30 of the Task ID, the slave ID with data, the needed slot count, or the like and then assigns a Map process task. Furthermore, the Map assignment unit 14 updates the "state" of the assigned Map process task from "Not assigned" to "Running".

The estimating unit 15 is a processing unit that estimates a processing amount of a Reduce process task by using the execution result of a Map process task. Specifically, the estimating unit 15 acquires an amount of data of each of the Reduce process tasks from the completion notifications of the Map processes received from the slave server 30.

In this way, the estimating unit 15 adds an amount of data of the Reduce process tasks that are acquired from the result of a predetermined number of the Map processes and estimates an amount of data of the Reduce process tasks. Then, the estimating unit 15 stores the estimated amount of data of the Reduce process task in the amount of processing data in the task list DB 12b and stores true in the flag if the amount of data of the Reduce process task is equal to or greater than a predetermined value. Furthermore, the estimating unit 15 updates the "state" of the Map process task, which is received from the completion notification, from "Running" to "Done".

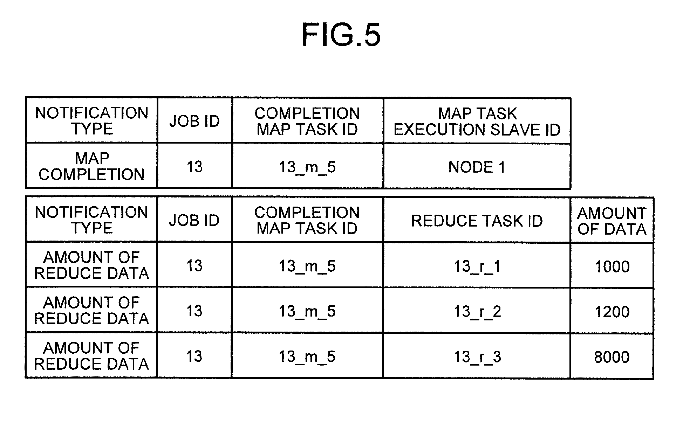

FIG. 5 is a schematic diagram illustrating an example of a completion notification of a Map process. The completion notification illustrated in FIG. 5 is a completion notification that is sent by each of the slave servers 30 to the master server 10. As illustrated in FIG. 5, the completion notification includes the Map completion content constituted by "the notification type, the Job ID, the completion Map Task ID, and the Map task execution slave ID and the Map completion content constituted by the notification type, the Job ID, the completion Map Task ID, the Reduce Task ID, and the amount of data".

The "notification type" stored here is information indicating whether a notification is a completion notification of a Map process or a notification is Reduce information. If the notification is a completion notification of a Map process, "Map completion" is set and, if the notification is Reduce information, the "amount of Reduce data" is set. In the "Job ID", an identifier for a job to which a Map process belongs is set. In the "completion Map Task ID", an identifier for specifying a completed Map process task is set. In the "Map task execution slave ID", an identifier for a slave server that has executed the subject Map process task and that has sent a completion notification is set. In the "Reduce Task ID", an identifier for specifying a Reduce process task in which an amount of data is determined from the execution result of the subject Map process is set. In the "amount of data", an amount of data of a Reduce process task that is determined from the execution result of the subject Map process is set.

The example illustrated in FIG. 5 indicates the result of the completion of the Map process task of "13_m_5" in the job with the "Job ID" of "13". This Map process task "13_m_5" is the task that has been executed in the slave server "Node1". Furthermore, the example indicates that, due to this Map process task "13_m_5", the three Reduce processes, i.e., "13_r_1", "13_r_2", and "13_r_3", are present in the job with the "Job ID" of "13". Furthermore, the example indicates that, due to this Map process task "13_m_5", the amount of data of the Reduce process task "13_r_1" is "1000", the amount of data of the Reduce process task "13_r_2" is "1200", and the amount of data of the Reduce process task "13_r_3" is "8000".

In this way, the estimating unit 15 acquires an amount of data of a Reduce process task from a completion notification of a Map process task and adds the amount of data. Furthermore, if the result of the addition exceeds "10000", the estimating unit 15 sets "true" in the flag.

At this point, a trigger at which the estimating unit 15 estimates the sum of the Reduce processes can be variously set. Specifically, it is possible to arbitrary set, as the trigger, the degree of the completion of a Map process task that is used to determine whether an amount of processing data exceeds a threshold.

For example, the estimating unit 15 can perform the determination when a Map process with the previously specified percentage of the overall Map process task has been completed. Furthermore, the estimating unit 15 can also perform the determination when a previously specified time has elapsed since a first Map process task has been ended. Furthermore, the estimating unit 15 can also perform the determination at an earlier time point between the two time points described above.

Furthermore, a first Map process task may also randomly be specified. In this way, because an estimating timing can arbitrarily be changed on the basis of the number of tasks of the Map process tasks or the like, customization can be made depending on input data.

The Reduce assignment unit 16 is a processing unit that assigns a Reduce process task when an assignment request for the Reduce process task is received from the slave server 30. Specifically, the Reduce assignment unit 16 assigns each of the Reduce process tasks to the slave servers 30 by using, for example, a hash function related to a distribution key. Then, the Reduce assignment unit 16 updates the "assignment slave ID", the "state", or the like illustrated in FIG. 4.

For example, when the Reduce assignment unit 16 receives an assignment request for a Reduce process task from the slave server 30 or the like, the Reduce assignment unit 16 refers to the task list DB 12b and specifies a Reduce process task with the "state" of "Not assigned". Then, the Reduce assignment unit 16 specifies a slave server at the assignment destination by using a hash function or the like. Thereafter, the Reduce assignment unit 16 stores the ID of the specified slave server 30 at the assignment destination in the "slave server ID" in the Reduce process task that is targeted for the assignment.

Then, the Reduce assignment unit 16 notifies the specified assigned slave server 30 at the assignment destination of the Task ID, the needed slot count, the amount of processing data, the flag, or the like and then assigns a Reduce process task. Furthermore, the Reduce assignment unit 16 updates the "state" of the assigned Map process task from "Not assigned" to "Running". Furthermore, when the Reduce assignment unit 16 receives a completion notification of the Reduce process task, the Reduce assignment unit 16 updates the "state" of the subject Reduce process task from "Running" to "Done".

### Configuration of the slave server

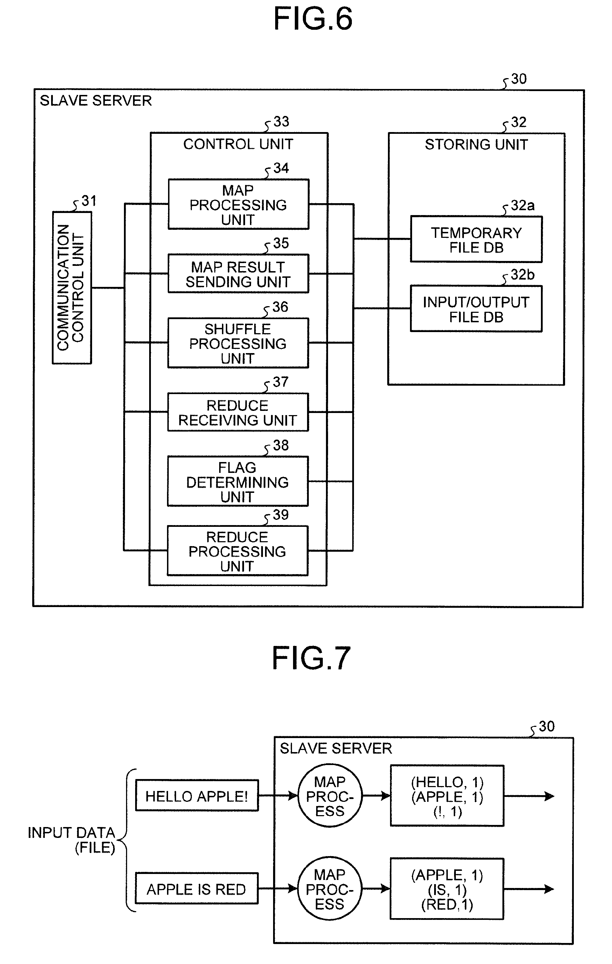

FIG. 6 is a functional block diagram illustrating the functional configuration of a slave server according to the first embodiment. As illustrated in FIG. 6, the slave server 30 includes a communication control unit 31, a storing unit 32, and a control unit 33.

The communication control unit 31 is a processing unit that executes communication with the master server 10 or the other slave servers 30 and is, for example, a network interface card. For example, the communication control unit 31 receives assignment of various tasks from the master server 10 and sends completion notifications of various tasks. Furthermore, the communication control unit 31 receives data that has been read from the target slave server 30 in accordance with the execution of the various task processes.

The storing unit 32 is a storage device that includes a temporary file DB 32a and an input/output file DB 32b and is, for example, a memory, a hard disk, or the like. Furthermore, the storing unit 32 stores therein a program or the like executed by the control unit 33.

The temporary file DB 32a is a database that temporarily stores therein intermediate data that is created in a Map process, a Shuffle process, a Reduce process, or the like; data that has been read from the other slave servers 30 or the like; and data that is used when each of the processing units executes a process. The input/output file DB 32b is a database that stores therein an input of a Map process and an output of a Reduce process and that cooperates with the input/output DB server 2.

The control unit 33 is a processing unit that includes a Map processing unit 34, a Map result sending unit 35, a Shuffle processing unit 36, a Reduce receiving unit 37, a flag determining unit 38, and a Reduce processing unit 39 and is, for example, an electronic circuit, such as a processor. Furthermore, the control unit 33 manages the overall process performed by the slave server 30.

The Map processing unit 34 is a processing unit that executes a Map process task. Specifically, the Map processing unit 34 requests the master server 10 to assign a Map process task by using heartbeats or the like. Then, the Map processing unit 34 receives Map assignment information that includes the Task ID, the slave ID with data, the needed slot count, or the like from the master server 10.

Thereafter, if a slave server is the slave server 30 that is specified by the "slave ID with data", the Map processing unit 34 acquires data from the input/output file DB 32b in accordance with the received Map assignment information, whereas, if not, the Map processing unit 34 acquires data from the slave server 30 that is specified by the "slave ID with data"; stores the acquired data in the temporary file DB 32a or the like; and executes the Map process by using the number of slots specified by the "needed slot count". Then, the Map processing unit 34 stores the result of the Map process in the temporary file DB 32a or the like. The result of the Map process created at this point includes, for example, as illustrated in FIG. 5, the task ID of a Reduce process, an amount of data, or the like.

The Map result sending unit 35 is a processing unit that sends the result of the Map process executed by the Map processing unit 34 to the master server 10. For example, when the Map result sending unit 35 is notified by the Map processing unit 34 indicating that the Map process has been ended, the Map result sending unit 35 reads some of the results of the Map process from the temporary file DB 32a or the like. Then, the Map result sending unit 35 creates the completion notification illustrated in FIG. 5 and then sends the completion notification to the master server 10.

The Shuffle processing unit 36 is a processing unit that sorts the results of the Map processes by "Key"; that merges the pairs of "Key, Value" having the same "Key"; and that creates the processing target for a Reduce process. Specifically, when the Shuffle processing unit 36 receives a notification from the master server 10 indicating that the Map process has been ended, the Shuffle processing unit 36 acquires the result of the target Map process from each of the slave servers 30 as a preparation for execution of a Reduce process performed on a job to which the subject Map process belongs. Then, the Shuffle processing unit 36 sorts the results of the Map processes by previously specified "Key", merges the results of the processes having the same "Key", and stores the processed result in the temporary file DB 32a.

For example, the Shuffle processing unit 36 receives, from the master server 10, the completion of the Map process tasks of "1_m_1, 1_m_2, 1_m_3, 1_m_4" in the "Job ID" of "1", i.e., a start of the execution of the Reduce process task with the "Job ID" of "1". Then, the Shuffle processing unit 36 acquires the results of the Map processes from the Node1, Node2, Node3, and the Node4. Subsequently, the Shuffle processing unit 36 sorts and merges the results of the Map processes and stores the result in the temporary file DB 32a or the like.

The Reduce receiving unit 37 is a processing unit that receives a Reduce process task assigned by the master server 10. For example, the Reduce receiving unit 37 receives Reduce process task information constituted by the Job ID, the Task ID, the needed slot count, the amount of processing data, the flag, or the like. Then, the Reduce receiving unit 37 stores the received information in the temporary file DB 32a or the like.

The flag determining unit 38 is a processing unit that determines whether a flag is set in a Reduce process task that is assigned by the master server 10. Specifically, the flag determining unit 38 refers to the information on the Reduce process task that is stored by the Reduce receiving unit 37 in the temporary file DB 32a or the like and determines whether a flag is set. Then, the flag determining unit 38 notifies the Reduce processing unit 39 of the determination result.

For example, if the information on the Reduce process task indicating that "the Job ID is 2, the Task ID is 2_r_1, the needed slot count is 1, the amount of processing data is 24000, and the flag is set to true", the flag determining unit 38 determines that a flag is set because "true is set to the flag". Furthermore, if "true" is not set in a "flag", the flag determining unit 38 determines that a flag is not set.

The Reduce processing unit 39 is a processing unit that changes, on the basis of the determination result obtained by the flag determining unit 38, a processing method of a Reduce process task and that executes the Reduce process task. Specifically, if a flag is set in an assigned Reduce process task, the Reduce processing unit 39 executes the distributed processing on the assigned Reduce process task. In contrast, if a flag is not set in the assigned Reduce process task, the Reduce processing unit 39 executes the assigned Reduce process task without executing the distributed processing. Then, the Reduce processing unit 39 stores the processing result of the Reduce process task in the input/output file DB 32b or the like.

For example, the Reduce processing unit 39 divides the assigned Reduce process task into sub tasks by using at least one of the number of processors included in the slave server 30, the number of disks included in the slave server 30, and a previously specified number and then executes, in parallel, each of the sub tasks by using a plurality of processors.

For example, if the number of processors or the number of disks is four, the Reduce processing unit 39 divides a Reduce process task into four sub tasks and then executes, in parallel, each of the sub tasks by using the four processors.

### Description of a Map process

In the following, a Map process performed by the slave servers 30 will be described. FIG. 7 is a schematic diagram illustrating a Map process. As illustrated in FIG. 7, each of the slave servers 30 receives, as input data, "Hello Apple!" and "Apple is red"; executes a Map process on each piece of the input data; and then outputs a pair of "Key, Value".

In the example illustrated in FIG. 7, the slave server 30 executes the Map process on "Hello Apple!"; counts the number of elements in the input data; and outputs the pair of "Key, Value" in which the element is indicated by "Key" and the counted result is indicated by "Value". Specifically, the slave server 30 creates "Hello, 1", "Apple, 1", and "!, 1" from the input data of "Hello Apple!". Similarly, the slave server 30 creates "Apple, 1" , "is, 1" , and "red, 1" from the input data of "Apple is red".

### Shuffle process

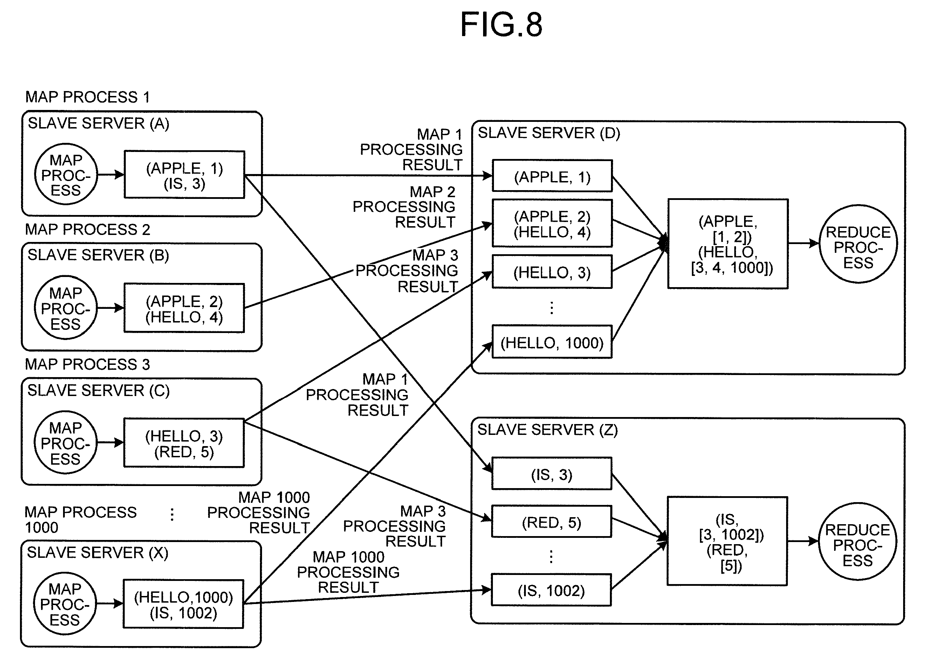

In the following, a Shuffle process executed by each of the slave servers 30 will be described. FIG. 8 is a schematic diagram illustrating a Shuffle process. As illustrated in FIG. 8, each of the slave servers 30 acquires the result of the Map process from each of the slave servers and then executes a Shuffle process.

In the example illustrated in FIG. 8, the slave servers (A), (B), (C), and ... execute a Map process task belonging to the same job (for example, Job ID of 20) and the slave servers (D) and (Z) execute a Reduce process task belonging to the Job ID of 20.

For example, the slave server (A) executes a Map process 1 and creates "Apple, 1" and "is, 3"; The slave server (B) executes a Map process 2 and creates "Apple, 2" and "Hello, 4"; and the slave server (C) executes a Map process 3 and creates "Hello, 3" and "red, 5". The slave server (X) executes a Map process 1000 and creates "Hello, 1000" and "is, 1002".

Subsequently, the slave server (D) and the slave server (Z) acquire the result of the Map process, of each of the slave servers, that is used for the assigned Reduce process tasks and then sort and merge the results. Specifically, it is assumed that the Reduce process tasks related to "Apple" and "Hello" are assigned to the slave server (D) and it is assumed that the Reduce process tasks related to "is" and "red" are assigned to the slave server (Z).

In this case, the slave server (D) acquires, from the slave server (A), "Apple, 1" that is the result of the Map process 1 and acquires, from the slave server (B), "Apple, 2" and "Hello, 4" that are the result of the Map process 2. Furthermore, the slave server (D) acquires, from the slave server (C), "Hello, 3" that is the result of the Map process 3 and acquires, from the slave server (X), "Hello, 1000" that is the result of the Map process 1000. Then, the slave server (D) sorts and merges these results and creates "Apple, [1,2]" and "Hello, [3,4,1000]".

Similarly, the slave server (Z) acquires, from the slave server (A), "is, 3" that is the result of the Map process 1; acquires, from the slave server (C), "red, 5" that is the result of the Map process 3; and acquires, from the slave server (X), "is, 1002" that is the result of the Map process 1000. Then, the slave server (Z) sorts and merges these results and then creates "is, [3,1002]" and "red, [5]".

### Reduce process

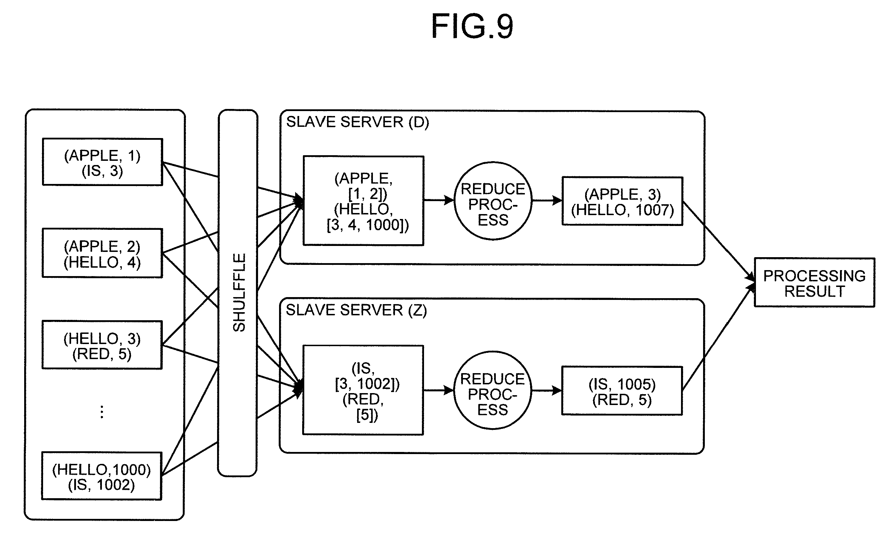

In the following, a description will be given of a Reduce process executed by the slave server 30. FIG. 9 is a schematic diagram illustrating a Reduce process. As illustrated in FIG. 9, each of the slave servers 30 executes a Reduce process by using a Shuffle result that is created from the results of the Map processes performed by each of the slave servers. Specifically, similarly to the description of a Shuffle process, it is assumed that the Reduce process tasks related to "Apple" and "Hello" are assigned to the slave server (D) and it is assumed that the Reduce process tasks related to "is" and "red" are assigned to the slave server (Z).

In this example, the slave server (D) creates, as the result of the Reduce process, "Apple, 3" and "Hello, 1007" from "Apple, [1,2]" and "Hello, [3,4,1000]" that are the results of the Shuffle processes. Similarly, the slave server (Z) creates, as the result of the Reduce process, "is, 1005" and "red, 5" from "is, [3,1002]" and "red, [5]" that are the results of the Shuffle processes.

### Setting of a flag for a Reduce process task

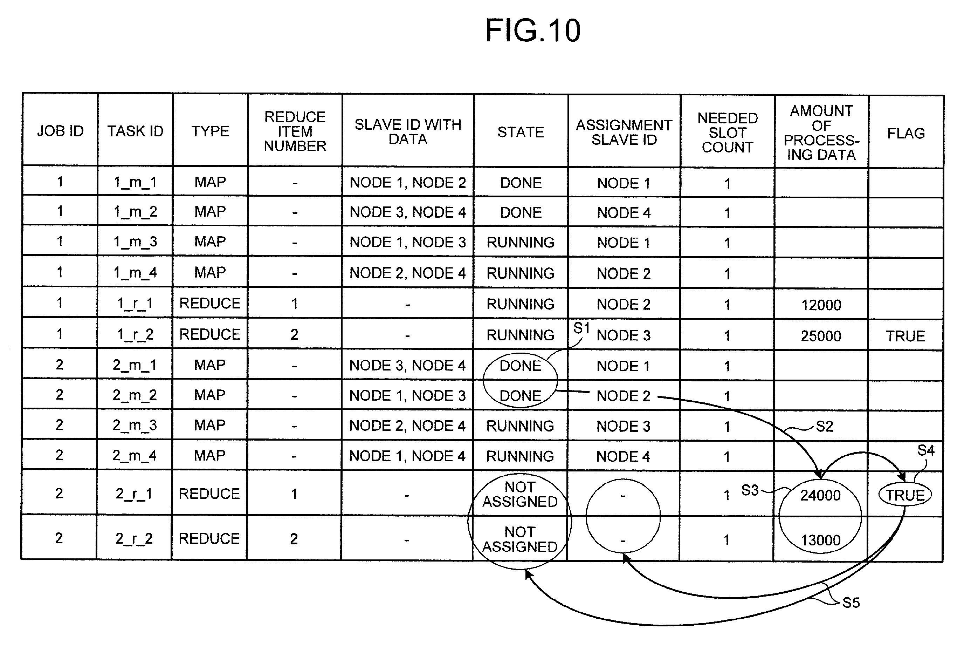

In the following, a description will be given of an example in which the master server 10 sets a flag in the Reduce process task from the result of a Map process. FIG. 10 is a schematic diagram illustrating a process of setting a flag by estimating the processing amount of a Reduce process task. FIG. 10 illustrates the task list held by the master server 10.

For "Job ID of 1" in the task list illustrated in FIG. 10 indicates that the assignment of a Reduce process has been completed and indicates that the Reduce process has already been executed. In this state, it is assumed that, from among the Map process tasks of 2_m_1, 2_m_2, 2_m_3, and 2_m_4 with the Job ID of 2, the tasks of "2_m_1" and "2_m_2" have been completed (Step S1).

Then, the master server 10 receives a Map completion notification 1 that includes an amount of data for a Reduce process received from the Node1 that has executed the Map process task "2_m_1" and receives a Map completion notification 2 that includes an amount of data for a Reduce process received from a Node2 that has executed the Map process task "2_m_2" (Step S2).

Subsequently, the master server 10 estimates, from the received Map completion notification 1 and the Map completion notification 2, that an amount of processing data of the Reduce process tasks "2_r_1" and "2_r_2" with the Job ID of 2 are "24000" and "13000", respectively (Step S3).

Then, the master server 10 sets a flag of "true" to the Reduce process task "2_r_1" in which the amount of processing data exceeds the threshold of "20000" (Step S4). Then, the master server 10 decides the assignment destination of the Reduce process tasks "2_r_1" and "2_r_2" by using a hash function and then sends, to the Node to which the Reduce process task "2_r_1" is assigned, the flag of "true" together with the Reduce process task (Step S5).

In this way, when some of the Map process tasks have been completed and before all of the Map process tasks in a job have been ended, the master server 10 estimates an amount of processing data of a Reduce process task and then sets a flag in accordance with the estimated result.

Process performed by the master server

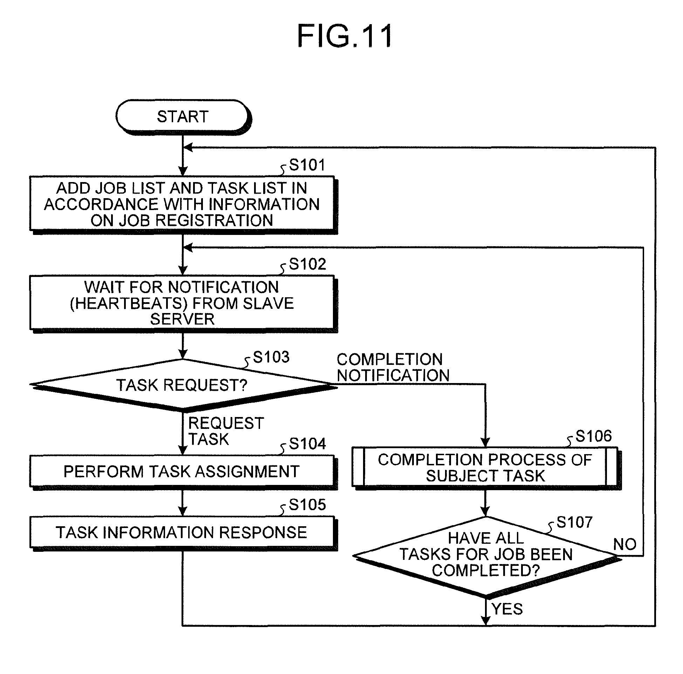

FIG. 11 is a flowchart illustrating the flow of a process executed by the master server according to the first embodiment. As illustrated in FIG. 11, the master server 10 adds a job list to the job list DB 12a and adds a task list to the task list DB 12b in accordance with the registration information on a job that is registered by an administrator or the like (Step S101).

Then, the master server 10 waits until a notification, such as heartbeats, is received from the slave server 30 (Step S102). If a notification is received, the master server 10 determines whether the notification is a task request or a completion notification of a task (Step S103).

Then, if it is determined that the received notification is a task request (Step S103: task request), the Map assignment unit 14 in the master server 10 performs task assignment by using a hash function or the like (Step S104). Thereafter, the Map assignment unit 14 sends, to the slave server 30 that is the notification request source, task information on the assigned task as a response (Step S105). Here, the task information includes therein the information that corresponds to a single line of a subject line of the job list related to the job belonging to the task and includes therein the information that corresponds to a single line of a subject line in the task list.

In contrast, if it is determined that the received notification is the completion notification of the task (Step S103: completion notification), the control unit 13 in the master server 10 executes a completion process of the target task (Step S106). Thereafter, if all of the tasks in a job have been completed (Yes at Step S107), the control unit 13 returns to Step S101 and repeatedly performs the process at Step S101 and the subsequent processes. In contrast, if all of the tasks in the job have not been completed (No at Step S107), the control unit 13 returns to Step S102 and repeatedly performs the process at Step S102 and the subsequent processes.

### Completion process of a task

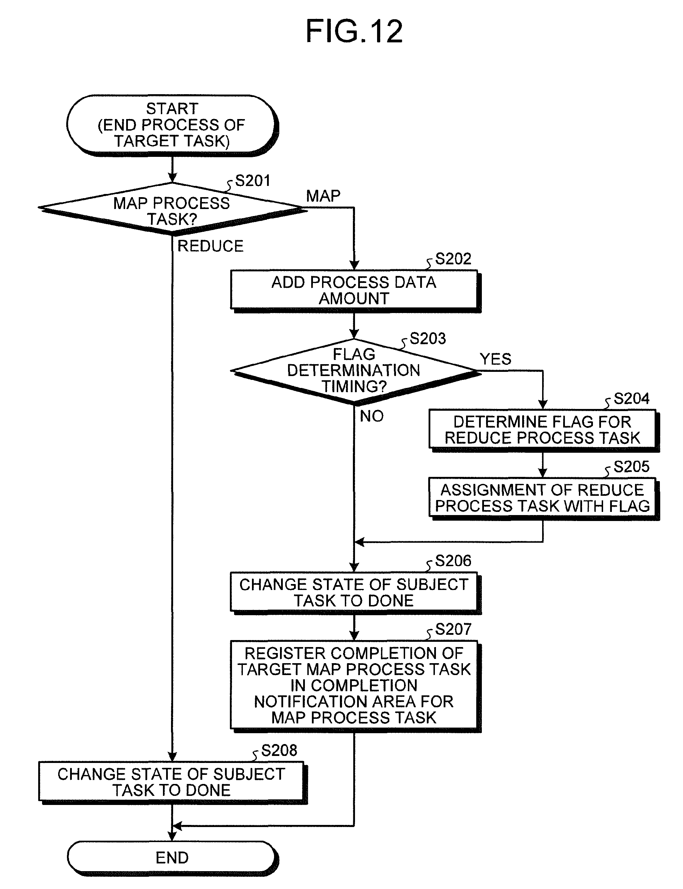

FIG. 12 is a flowchart illustrating the flow of a process of completing a subject task executed by the master server. This process is performed at Step S106 illustrated in FIG. 11.

As illustrated in FIG. 12, if it is determined that a received completion notification is a completion notification of the Map process task (Step S201: Map), the estimating unit 15 in the master server 10 adds an amount of processing data of a Reduce process task from a completion notification of an ended Map process (Step S202).

For example, if an identifier indicating a Map process task is added to the header of the received completion notification, the estimating unit 15 checks the completion notification of the Map process task and calculates, on the basis of the amount of Reduce data included in the subject completion notification, an amount of data of the subject Reduce process illustrated in FIG. 4.

Then, if the estimating unit 15 determines that a predetermined Map process task has been completed and determines that it is time to determine a flag (Yes at Step S203), the estimating unit 15 refers to FIG. 4 and determines whether a Reduce process task in which an amount of processing data exceeds a predetermined value is present (Step S204).

Then, the estimating unit 15 sets the flag "true" to the Reduce process task in which a processing (transfer) amount of data exceeds the predetermined value and then performs assignment of the Reduce process task to which a flag is attached (Step S205). For example, the estimating unit 15 decides, by using a hash value or the like, the assignment destination of the Reduce process task to which the flag "true" is set and then sends the Reduce process task to the decided slave server 30 at the assignment destination.

Subsequently, the estimating unit 15 changes the "state" of the Map process task that has received the completion notification to "Done" (Step S206) and then registers the completion of the Map process task into a completion notification area for the Map process task (Step S207).

In contrast, if it is determined that the received completion notification is not a Map process task but a Reduce process task (Step S201: Reduce), the Reduce assignment unit 16 in the master server 10 changes the "state" of the Reduce process task that has received the completion notification to "Done" (Step S208).

### Process performed by a slave server

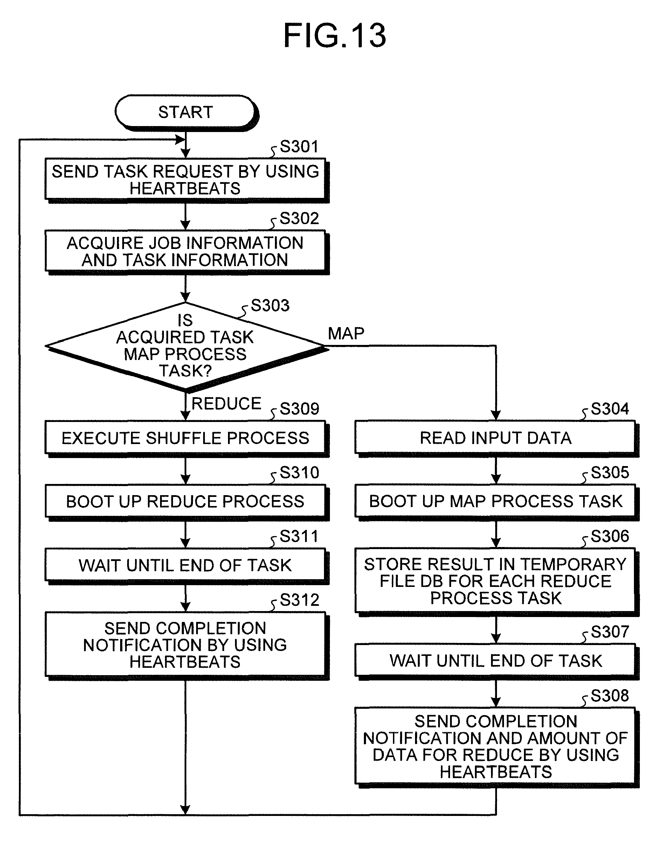

FIG. 13 is a flowchart illustrating the flow of a process executed by the slave server according to the first embodiment. As illustrated in FIG. 13, the slave server 30 sends a task request to the master server 10 by using heartbeats (Step S301).

Then, the slave server 30 acquires, as a response to the task request, job information and task information (Step S302) and then determines whether the acquired task information is information on a Map process task (Step S303).

Then, if it is determined that the acquired task information is the information on the Map process task (Step S303: Map), the Map processing unit 34 in the slave server 30 reads the acquired input data (Step S304) and boots up the Map process task (Step S305).

For example, the Map processing unit 34 acquires input data from the slave server 30 that is specified by the "slave ID with data" stored in the information on the acquired Map process task and boots up a Map process task that is assigned by the information on the acquired Map process task.

Thereafter, the Map processing unit 34 stores a processing result for each Reduce process task in the temporary file DB 32a (Step S306) and waits until the Map process task is ended (Step S307). Then, the Map result sending unit 35 sends, to the master server 10, a completion notification of the Map process task and an amount of data for the Reduce process task by using heartbeats (Step S308).

In contrast, if it is determined that the task information that has been acquired by the Reduce receiving unit 37 in the slave server 30 is the information on a Reduce process task (Step S303: Reduce), the Shuffle processing unit 36 acquires the result of the Map process from each of the slave servers 30 and then executes a Shuffle process (Step S309).

The Reduce processing unit 39 executes the Reduce process task acquired by the Reduce receiving unit 37 (Step S310) and waits until the task is ended (Step S311). If the task has been completed, the Reduce processing unit 39 sends a completion notification to the master server 10 by using heartbeats (Step S312).

### (Start process of a Reduce process task)

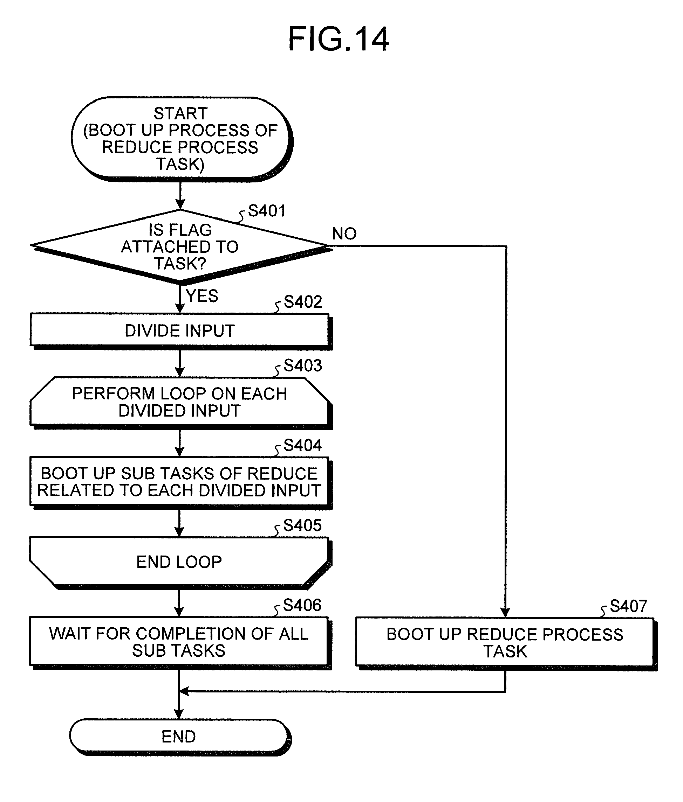

FIG. 14 is a flowchart illustrating the flow of a start process of a Reduce process task executed by the slave server. As illustrated in FIG. 14, the flag determining unit 38 determines whether the flag "true" is set to the Reduce process task received by the Reduce receiving unit 37 (Step S401).

Then, if the flag determining unit 38 determines that the flag "true" is set to the Reduce process task (Yes at Step S401), the Reduce processing unit 39 divides an input of the Reduce process task (Step S402).

Subsequently, the Reduce processing unit 39 performs a loop process on each divided input at Steps S403 to S405. Specifically, for the input of each divided Reduce process task, the Reduce processing unit 39 boots up the sub tasks of the Reduce process task (Step S404).

Then, the Reduce processing unit 39 waits until all of the sub tasks for the Reduce process task have been completed (Step S406), If all of the sub tasks have been completed, the Reduce processing unit 39 ends the process.

In contrast, at Step S401, if the flag determining unit 38 determines that the flag "true" is not attached to the Reduce process task (No at Step S401), the Reduce processing unit 39 executes the received Reduce process task without processing anything (Step S407). Then, if the Reduce process task has been completed, the Reduce processing unit 39 ends the process.

### Dividing process of a Reduce process task

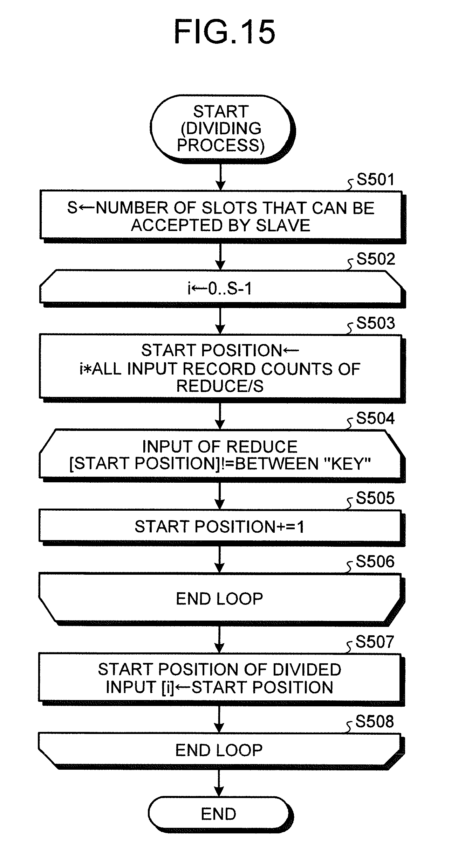

FIG. 15 is a flowchart illustrating the flow of a process of dividing the Reduce process task executed by the slave server. As illustrated in FIG. 15, Reduce processing unit 39 in the slave server 30 sets the number of slots that can be accepted by, as a slave, the own server to "S" (Step S501).

Then, the Reduce processing unit 39 sequentially performs the loop process at Steps S502 to S508 in this order until the variable "i" becomes S-1. Specifically, the Reduce processing unit 39 sets the calculation result of "ixall record counts of a Reduce process task/S" to "start position" (Step S503). Then, the Reduce processing unit 39 performs the loop process that repeats the processes at Step S504 to S506 during a time period for which the "start position" of an input of a Reduce process task is not "Key".

Specifically, the Reduce processing unit 39 increments the "start position" until the "start position" of the input of the Reduce process task becomes "Key" (Step S505). Then, if the "start position" of the input of the Reduce process task becomes "Key", the Reduce processing unit 39 substitutes the "start position" calculated at Steps S504 to S506 for the start position "i" of divided input (Step S507). Then, the Reduce processing unit 39 performs the loop process at Step S502 and the subsequent processes.

As described above, after performing some of the Map process tasks, the master server 10 detects a Reduce process task in which an amount of data is possibly concentrated. Then, when the master server 10 allows the slave servers 30 to process the detected Reduce process task, the master server 10 can allow the slave servers 30 to perform the process in parallel.

In this way, the master server 10 can change a processing method by informing each of the slave servers 30 of information related to un-uniformity of the processing amount of a Reduce task that is not able to recognize when a task is assigned. Consequently, by allowing only the target slave servers to give priority to a Reduce process task, the time taken to complete the overall job can be shortened.

Furthermore, if a predetermined percentage of all of the Map process tasks has been ended or if a predetermined time period has been elapsed since a first Map process task was ended, the master server 10 can estimate the processing amount of the Reduce process task. Consequently, because the master server 10 can determine, by using an arbitrary method, the degree of the completion of a Map process task that is used to determine whether a flag is to be attached, it is possible to use a method suitable for a job, thus enhancing the versatility.

For a Reduce process task with a large processing amount, because a flag is attached, the slave server 30 can divide the Reduce process task and execute the task and thus the processing time can be shortened. Furthermore, when dividing the Reduce process task, the slave server 30 divides the Reduce process task by using at least one of the number of processors, the number of disks, and a previously specified number. Consequently, the slave server 30 can divide the task in accordance with the processing performance of the own server.

### [b] Second embodiment

When another Reduce process task has already been assigned to the slave server 30 to which a Reduce process task with a flag is to be assigned, the master server 10 can give priority to the Reduce process task with the flag.

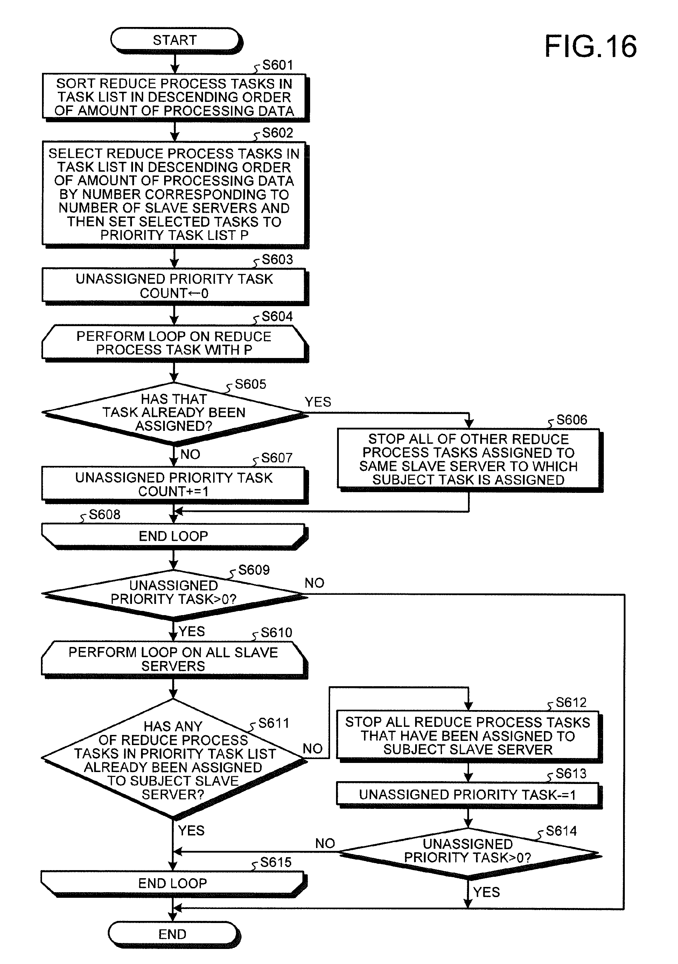

Accordingly, in a second embodiment, a description will be given of an example of giving priority to the Reduce process task with the flag. FIG. 16 is a flowchart illustrating the flow of an assignment process of a Reduce process task according to a second embodiment.

As illustrated in FIG. 16, the Reduce assignment unit 16 in the master server 10 sorts the Reduce process tasks in the task list DB 12b in the descending order of the amount of processing data (Step S601). Subsequently, the Reduce assignment unit 16 selects the Reduce process tasks in the task list DB 12b in the descending order of the amount of processing data the number of which corresponds to the number of the slave servers 30 and then sets the selected tasks to a "priority task list P" (Step S602). Then, the Reduce assignment unit 16 sets an "unassigned priority task count" to "0" (Step S603).

Thereafter, for the Reduce process tasks in the "priority task list P", the Reduce assignment unit 16 performs a loop process from Step S604 to Step S608. Specifically, if the Reduce process task targeted for a process has already been assigned (Yes at Step S605), the Reduce assignment unit 16 stops another Reduce process task that is assigned to the same slave server 30 to which the task is assigned (Step S606). In contrast, if the Reduce process task targeted for a process has not been assigned (No at Step S605), the Reduce assignment unit 16 increments the "unassigned priority task count" (Step S607).

When the loop process from Steps S605 to S608 has been ended, the Reduce assignment unit 16 determines whether the "unassigned priority task count" is equal to or greater than 0 (Step S609). Then, if the "unassigned priority task count" is 0 (No at Step S609), the Reduce assignment unit 16 ends the process.

In contrast, the "unassigned priority task count" is greater than 0 (Yes at Step S609), the Reduce assignment unit 16 performs a loop process on all of the slave servers 30 from Steps S610 to S615.

Specifically, if any of the Reduce process tasks in the priority task list has already been assigned to the target slave server 30 (Yes at Step S611), the Reduce assignment unit 16 ends the loop process executed on the slave server 30 (Step S615) and executes the loop process on the subsequent slave server 30.

In contrast, if no Reduce process task in the priority task list has been assigned to the target slave server 30 (No at Step S611), the Reduce assignment unit 16 stops the other Reduce processes task that have been assigned to the target slave server 30 (Step S612). Then, the Reduce assignment unit 16 assigns the target prioritized task to the subject slave server 30 and reduce the "unassigned priority task count" by one (Step S613).

Thereafter, if the "unassigned priority task count" after the subtraction of one is zero (Yes at Step S614), the Reduce assignment unit 16 ends the process. In contrast, if the "unassigned priority task count" after the subtraction of one is greater than zero (No at Step S614), the Reduce assignment unit 16 performs a loop process at Step S610 and the subsequent processes on the subsequent slave server 30.

In this way, if another Reduce process task has already been assigned to the slave server 30 to which a Reduce process task with a flag is to be assigned, the master server 10 can give priority to the Reduce process task with the flag. Consequently, because the master server 10 can perform, with priority, the Reduce process task to which the flag has been attached later, the time taken to complete the overall job can be shortened without depending on the order of the estimated Reduce process tasks.

In general, calculation time wasted due to a stop of a running task occurs, communication time wasted because transmitted data is not used any more occurs, or time taken to read and write data occurs. However, by stopping a Reduce process task that has already been assigned to the same slave server 30 to which a Reduce process task with a flag is to be assigned when a flag is set after some of the Map process tasks have been ended, it is possible to minimize the waste to a waste of some data transfer and to a waste of processing the data. Furthermore, because a Reduce process task with a flag that is on a critical path and that is desired to be started first can be promptly started, the overall processing time can be shortened.

### [c] Third Embodiment

However, the master server 10 may also perform assignment after some Map process tasks are ended without performing the assignment immediately after a flag of a Reduce process task is set. Accordingly, in a third embodiment, a description will be given of an example in which assignment of a Reduce process task is performed, without promptly performing the assignment of the Reduce process, after some Map process tasks are ended.

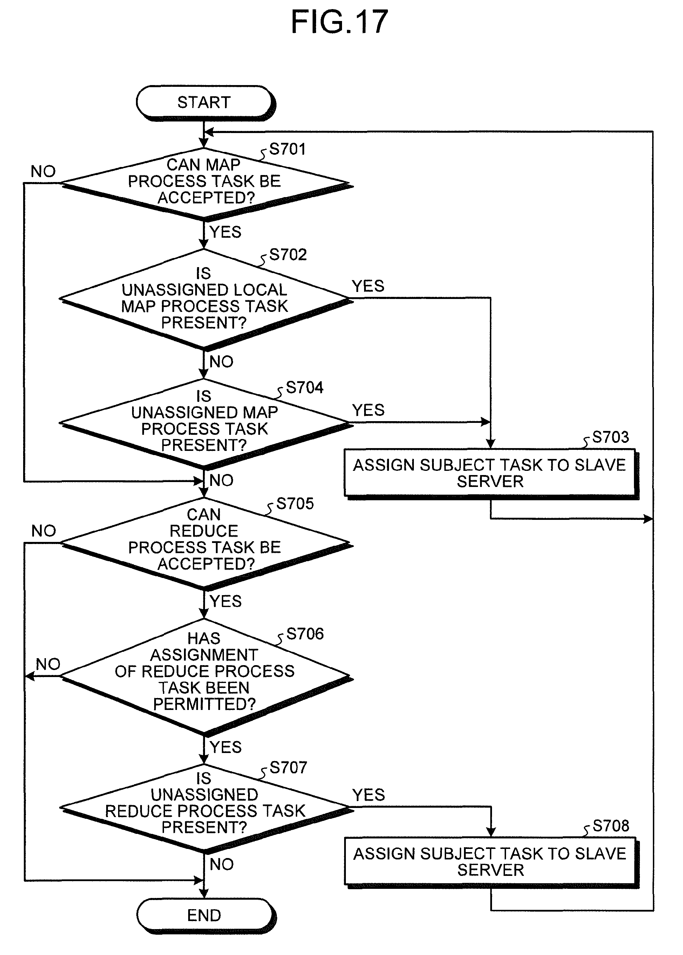

FIG. 17 is a flowchart illustrating the flow of an assignment process of a Reduce process task according to a third embodiment. As illustrated in FIG. 17, if the slave server 30 that has requested a task can accept a Map process task (Yes at Step S701), the Map assignment unit 14 in the master server 10 determines whether an unassigned local Map process task is present (Step S702). The local Map process task mentioned here indicates a task in which the slave server 30 that has requested a task is included in the line of the "slave ID with data" in the task list.

Then, if the Map assignment unit 14 determines that an unassigned local Map process task is present (Yes at Step S702), the Map assignment unit 14 assigns the unassigned local Map process task to the slave server 30 that has requested the task (Step S703). Thereafter, the Map assignment unit 14 repeats the process at Step S701 and the subsequent processes.

In contrast, if the Map assignment unit 14 determines that an unassigned local Map process task is not present (No at Step S702) and determines that an unassigned Map process task is present (Yes at Step S704), the Map assignment unit 14 assigns the unassigned Map process task to the slave server that has requested the task (Step S703).

Then, if the Map process task is not able to be accepted (No at Step S701) or if an unassigned Map process task is not present (No at Step S704), the Map assignment unit 14 performs the process at Step S705. Specifically, the Reduce assignment unit 16 determines whether the slave server 30 that has requested the task can accept the Reduce process task. The state in which the Reduce process task can be accepted mentioned here indicates the state of "the number of Reduce process tasks that can be processed by the slave servers 30>the sum of the needed slot count of the Reduce process tasks assigned to the slave servers 30".

If it is determined that the slave server 30 that has requested the task can accept the Reduce process task (Yes at Step S705), the Reduce assignment unit 16 performs the process at Step S706. Specifically, the Reduce assignment unit 16 refers to whether the Reduce assignment permission in the job list DB 12a is true and then determines whether assignment of the Reduce process task has been permitted.

Then, if the Reduce assignment unit 16 determines that the assignment of the Reduce process task has been permitted (Yes at Step S706), the Reduce assignment unit 16 determines whether an unassigned Reduce process task is present (Step S707).

At this point, if the Reduce assignment unit 16 determines that an unassigned Reduce process task is present (Yes at Step S707), the Reduce assignment unit 16 assigns the unassigned Reduce process task to the slave server 30 that has requested the task (Step S708). Then, the Reduce assignment unit 16 repeats the process at Step S701 and the subsequent processes.

In contrast, if the slave server 30 that has requested the task is not able to accept the Reduce process task (No at Step S705), if assignment of the Reduce process task is not permitted (No at Step S706), and if no unassigned Reduce process task is present (No at Step S707), the Reduce assignment unit 16 ends the process.

In this way, the master server 10 can also perform the assignment after the end of some of the Map process tasks, without performing assignment immediately after the flag of a Reduce process task is set. With this method, the start of data transfer in a shuffle process may sometimes be delayed; however, an amount of data of most of the Map process tasks uniform and the Map tasks assigned first are expected to be simultaneously ended. Consequently, the effect of a delay is limited, whereas there is no Reduce process task to be stopped; therefore, a waste related to the data transfer and the process thereof does not occur.

Accordingly, there may be a case in which some amount of excess processing time is taken; however, by shortening the processing time of the Reduce process task with a large amount of data that becomes a bottleneck, the overall processing time of a job can be shortened.

### [d] Fourth Embodiment

In the above explanation, a description has been given of the embodiment according to the present invention; however, the embodiment is not limited thereto and can be implemented with various kinds of embodiments other than the embodiment described above. Therefore, another embodiment will be described below.

### Flag determination of a Reduce process task

A description has been given of an example in which the master server 10 decides a Reduce process task, as the target for a flag, that corresponds to an amount of processing data that is equal to or greater than a predetermined value; however, the embodiment is not limited thereto and various determination references can be used for the determination.

For example, if the average of the amount of data of a Reduce process tasks is represented by "m", the master server 10 can attach, on the basis of previously set coefficient k, such as 2, a flag to a Reduce process task in which an amount of data is greater than "kxm".

Furthermore, if the average of the amount of data of a Reduce process task is represented by "m" and distribution is represented by "σ", the master server 10 can attach, on the basis of previously set coefficient k, such as 3, a flag to a Reduce process task in which an amount of data is greater than "m+k×σ".

Furthermore, if the number of tasks that can be simultaneously executed by the slave servers 30 is represented by "s" and the maximum amount of data of a Reduce process task is represented by "d", when an amount of data of a sub task is represented by "d/s=d"', the master server 10 can attach the flag to all of the Reduce process tasks with the amount of data that is greater than "d'".

### System

Of the processes described in the embodiment, the whole or a part of the processes that are mentioned as being automatically performed can also be manually performed, or the whole or a part of the processes that are mentioned as being manually performed can also be automatically performed using known methods. Furthermore, the flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. Furthermore, all or any part of the processing functions performed by each device can be implemented by a CPU and by programs analyzed and executed by the CPU or implemented as hardware by wired logic.

### Hardware

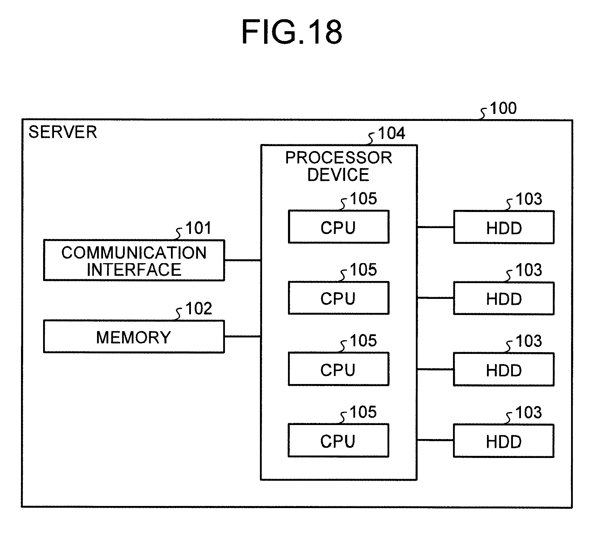

In the following, an example of the hardware configuration of each of the servers will be described. However, each of the servers has the same configuration; therefore, an example will be described here. FIG. 18 is a block diagram illustrating an example of the hardware configuration of each server. As illustrated in FIG. 18, a server 100 includes a communication interface 101, a memory 102, a plurality of hard disk drives (HDDs) 103, and a processor device 104.

The communication interface 101 corresponds to the communication control unit illustrated in FIGS. 2 and 6 and is, for example, a network interface card. The plurality of the HDDs 103 stores therein the program that operates the function illustrated in FIGS. 2 and 6 and stores therein DBs or the like.

A plurality of CPUs 105 included in the processor device 104 reads, from the HDDs 103 or the like, a program that executes the same process as that performed by the processing units illustrated in FIGS. 2 and 6 and loads the program in the memory 102, and thus the program operates the process that executes the function described with reference to FIGS. 2 and 6. Specifically, the process executes the same function as that performed by the Map assignment unit 14, the estimating unit 15, the Reduce assignment unit 16 included in the master server 10. Furthermore, the process executes the same function as that performed by the Map processing unit 34, the Map result sending unit 35, the Shuffle processing unit 36, the Reduce receiving unit 37, the flag determining unit 38, and the Reduce processing unit 39 included in the slave server 30.

In this way, by reading and executing the program, the server 100 operates as an information processing apparatus that executes the task assignment method or a task execution method. Furthermore, the server 100 reads the program from a recording medium by using a media reader and executes the read program so as to implement the same function as that described in the embodiments described above. The program described in the embodiments is not limited to be executed by the server 100. For example, the present invention may also be similarly used in a case in which another computer or a server executes the program or in which another computer and a server cooperatively execute the program with each other.

According to an aspect of the embodiment of the present invention, an advantage is provided in that the time taken to complete the overall job can be shortened.

## Claims

1. A task assignment program that causes a first server (10) to execute a process comprising:
assigning a first process to each of a plurality of second server devices (30);
estimating, when one or more completion notifications of one or more first tasks of a first process related to a second task of a second process that is assigned to each of the second server devices (30) and that is executed by using one or more execution results of the one or more first tasks are received, a processing amount of the second task; and
sending information related to the estimated processing amount to the second server devices (30) to each of which the second task is assigned.

2. The task assignment program according to claim 1, wherein
the estimating includes detecting, on the basis of an amount of data that is included in the one or more completion notifications of the one or more first tasks and that indicates the second task related to the one or more first tasks, the second task in which the amount of data is equal to or greater than a predetermined value; and
the sending includes sending, to the second server devices (30) to each of which the detected second task is assigned, an instruction to change a processing method of the second task.

3. The task assignment program according to claim 1 or 2, wherein the estimating includes, when a task with a predetermined percentage of all the first task ends or when a predetermined time is elapsed after the first task that was executed first ends, estimating the processing amount of the second task.

4. A task execution program that causes a first server (30) device to execute a process comprising:
receiving, from a second server device (10) that assigns a second task of a second process that uses one or more execution results of one or more first tasks of a first process to the first server device (30), information related to a processing amount of the second task; and
changing, in accordance with the related information when the second task assigned by the second server device (10) is executed, a processing method of the second task.

5. The task execution program according to claim 4, wherein the process further comprises sending, to the second server device (10) when execution of the one or more first tasks assigned by the second server device (10) has been completed, a completion result including the processing amount of the second task related to the completed one or more first tasks.

6. The task execution program according to claim 4 or 5, wherein the changing includes dividing, by using at least one of the number of processors included in the first server device (30), the number of disks included in the first server device (30), and a previously specified number, the assigned second task into sub tasks and performing parallel execution in a plurality of processors.

7. The task execution program according to claim 6, wherein the changing includes stopping, for the second task that is newly assigned, when it is determined that the assigned second task is divided into the sub tasks on the basis of the information related to the processing amount of the second task received from the first server device (30), the second task that has already been executed without being divided and starting execution of the second task that has newly been assigned.

8. A task assignment device (10) comprising:
a first assignment unit (14) that assigns a first process to each of a plurality of server devices;
an estimate execution unit (15) that estimates, when one or more completion notifications of one or more first tasks of the first process related to a second task of the second process that is assigned to each of the plurality of server devices and that is executed by using one or more execution results of the one or more first tasks are received, a processing amount of the second task; and
a sending unit (16) that sends information related to the estimated processing amount to the server devices to each of which the second task is assigned.

9. A task execution device (30) comprising:
a receiving unit (37) that receives, from a server device (10) that assigns a second task of a second process that uses one or more execution results of one or more first tasks of a first process, information related to a processing amount of the second task; and
a changing unit (39) that changes, in accordance with the related information when the second task assigned by the server device is executed, a processing method of the second task.

10. A task assignment method comprising:
assigning a first process to each of a plurality of server devices (30), using a processor;
estimating, when one or more completion notifications of one or more first tasks of the first process related to a second task of a second process that is assigned to each of the server devices (30) and that is executed by using one or more execution results of the one or more first tasks are received, a processing amount of the second task, using the processor; and
sending information related to the estimated processing amount to the server devices (30) to each of which the second task is assigned, using the processor.
